# EUROPEAN PATENT SPECIFICATION

(11) **EP 3 640 880 B1**
(45) Date of publication and mention of the grant of the patent: **24.02.2021**
(21) Application number: 19188792.6
(22) Date of filing: 29.07.2019
(51) Int. Cl.: G06Q 30/06, G07F 17/00, B60R 25/24

(54) **VEHICULAR CONTROL SYSTEM**
FAHRZEUGSTEUERUNGSSYSTEM
SYSTÈME DE COMMANDE DE VÉHICULE

(30) Priority: 18.10.2018 JP 2018196741
(43) Date of publication of application: 22.04.2020
(73) Proprietor: TOYOTA JIDOSHA KABUSHIKI KAISHA, Aichi-ken, 471-8571 (JP)
(72) Inventor: ATSUMI, Ryuta, Toyota-shi, Aichi-ken, 471-8571 (JP); OKADA, Hiroki, Toyota-shi, Aichi-ken, 471-8571 (JP)
(74) Representative: Kuhnen & Wacker Patent- und Rechtsanwaltsbüro PartG mbB

(56) References cited:
- EP-A1- 1 568 834
- EP-A1- 3 263 409
- EP-A1- 3 335 942
- WO-A1-2017/155960
- JP-A- 2012 041 712
- JP-B2- 6 193 785
- US-A1- 2012 313 796

## Description

### BACKGROUND OF THE INVENTION

### 1. Field of the Invention

The invention relates to a vehicular control system.

### 2. Description of Related Art

A smart key system is known as an authentication system for a vehicle. The smart key system includes a vehicle-mounted machine that authenticates a vehicle key carried by a user, via wireless communication, so that the system permits the user to operate the vehicle, for example, to lock or unlock vehicle doors or start a vehicle engine.

In the meantime, a carsharing service with which two or more users share a vehicle and use the vehicle has been proposed. In the carsharing service, the user who uses the service unlocks vehicle doors, using a mobile terminal (such as a smartphone) that is duly authorized in advance, and operates the vehicle, using a vehicle key that is kept in advance in a glove compartment within a vehicle cabin, for example. In this manner, the carsharing service can be performed, without requiring the users to directly passing (giving and receiving) the vehicle key between them.

### SUMMARY OF THE INVENTION

However, in the system in which the vehicle key is kept in the glove compartment as described above, a third party may acquire the vehicle key, through unlawful unlocking or picking (forced opening) of the vehicle door. Thus, the risk of vehicle theft is increased. While it has been proposed in Japanese Unexamined Patent Application Publication No. 2012-041712 (JP 2012-041712 A) that the vehicle key is stored in a key box provided in a vehicle cabin, in a condition where the key box is locked, there is still a risk of vehicle theft that would be caused by unlawful unlocking or picking of the key box. Thus, there is still some room for improvement in terms of security, in the carsharing service using the vehicle key EP 1 568 834 A1 discloses a keyless entry system and keyless entry method.

The invention provides a vehicular control system that utilizes a smart key system with high security.

A vehicular control system according to one aspect of the invention includes: a vehicle-mounted machine configured to perform first communication and second communication, the first communication being communication according to a first communication technology using radio waves of a first frequency band and the second communication being communication according to a second communication technology using radio waves of a second frequency band; a mobile terminal configured to perform third communication according to a third communication technology different from the first communication technology and the second communication technology; a first key device provided in a vehicle, the first key device being configured to obtain authentication information including an identifier of the vehicle from the mobile terminal using the third communication technology, and operate as a vehicle key of the vehicle specified by the identifier; and a second key device provided in the vehicle, the second key device being configured to receive a first computation result according to the third communication technology, the first computation result being a result of predetermined computation performed by the first key device based on a first signal, and the first signal being transmitted from the vehicle-mounted machine according to the first communication technology, obtain a second computation result by performing predetermined computation based on the first signal and send a second signal to the vehicle-mounted machine according to the second communication technology when the first computation result matches the second computation result.

According to the above aspect, the first key device starts operating as the vehicle key, when the mobile terminal that is owned by the carsharing user and duly authorized is successfully authenticated. With this control, even if a third party acquires the first key device through unlawful unlocking or picking (forced opening) of a vehicle door, for example, the vehicle is less likely to suffer from theft, since the first key device does not operate as the vehicle key. Also, according to the above aspect, in smart operation during carsharing service, a response to authentication, which is required by the vehicle-mounted machine to be generated from the first key device, is transmitted back to the vehicle-mounted machine, after being subjected to a determination made by the second key device. With this operation, the security is improved, as compared with a known smart key system using only the vehicle key (the first key device) or the key unit (the second key device).

In the above aspect, the third communication technology may be a short-range wireless communication technology; the first signal may be an low frequency signal; the second signal may be an radio frequency signal; the first key device may include a first BLE communicating unit configured to send and receive a signal based on the third communication technology to and from the mobile terminal and the second key device and a first LF communicating unit, the first BLE communicating unit being configured to receive the low frequency signal from the vehicle-mounted machine; and the second key device may include a second BLE communicating unit configured to send and receive a signal based on the third communication technology to and from the mobile terminal and the first key device, a second LF communicating unit configured to receive the low frequency signal from the vehicle-mounted machine, and an RF communicating unit configured to send the radio frequency signal to the vehicle-mounted machine.

In the above aspect, the second key device may be configured to send the radio frequency signal responsive to the low frequency signal to the vehicle-mounted machine only when the first key device operates as the vehicle key.

In the above aspect, the second LF communicating unit may be configured to receive, while distinguishing the low frequency signal toward an inside of a vehicle cabin from the low frequency signal toward an outside of the vehicle cabin, the low frequency signal transmitted from the vehicle-mounted machine toward the inside of the vehicle cabin and the low frequency signal transmitted from the vehicle-mounted machine toward the outside of the vehicle cabin.

In the above aspect, the first key device may be configured to receive, from the mobile terminal, time information indicating a period of validity in which the first key device is operable as the vehicle key and start counting time from a timing when the time information is received until the period of validity expires.

In the above aspect, the first key device may finish operating as the vehicle key in response to at least one of an end command received from the mobile terminal, operation to eliminate communication by the mobile terminal, or finishing operation by the first key device.

In the above aspect, the first key device may finish operating as the vehicle key when the period of validity expires.

In the above aspect, the first key device provided in the vehicle may be configured to: establish wireless communication with the mobile terminal through pairing operation; obtain the authentication information including the identifier of the vehicle from the mobile terminal using the third communication technology; authenticate the mobile terminal based on the authentication information; and operate as the vehicle key of the vehicle specified by the identifier of the vehicle when the mobile terminal is authenticated.

In the above aspect, the first frequency band and the second frequency band may be different from each other.

In the above aspect, the first key device may be a mobile device.

In the above aspect, the second key device may be fixed in the vehicle.

In the above aspect, the authentication information may include time information concerning a date and a time of start of use of the vehicle and a period of time for which the vehicle is used; and the first key device may be configured to compute, based on the time information, a period of validity in which the first key device is operable as the vehicle key, set a timer such that the timer finishes counting when the period of validity expires; and cause the timer to start counting at a timing when the timer is set such that the timer finishes counting when the period of validity expires.

In the above aspect, the first key device may be configured to finish operating as the vehicle key at a timing when the period of validity counted with the timer expires.

According to the invention, the vehicular control system that utilizes the smart key system with high security can be provided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view of a vehicular control system according to one embodiment of the invention;
FIG. 2 is a sequence diagram of a process performed in the vehicular control system at the start of service;
FIG. 3 is a sequence diagram of a process performed in the vehicular control system when an engine is started during the service; and
FIG. 4 is a sequence diagram of a process performed in the vehicular control system when a vehicle door is locked or unlocked during the service.

### DETAILED DESCRIPTION OF EMBODIMENTS

A vehicular control system of this invention uses a first key device corresponding to a vehicle key, and a second key device corresponding to a key unit, as interfaces that connect a known smart key system with a mobile terminal, such as a smartphone. The vehicular control system of the invention causes the first key device to operate as the vehicle key, when its communication with a mobile terminal that is duly authorized is established. In subsequent smart operation, collation and response of signals and vehicle identification ID are carried out, via communication pathways from a vehicle-mounted machine to the first key device, from the first key device to the second key device, and from the second key device to the vehicle-mounted machine. Here, the smart operation means operation to unlock and lock doors and trunk room of the vehicle without using any physical key, operation to start an engine, and so forth. Thus, the vehicular control system that utilizes the smart key system, assuring a high level of security, can be provided.

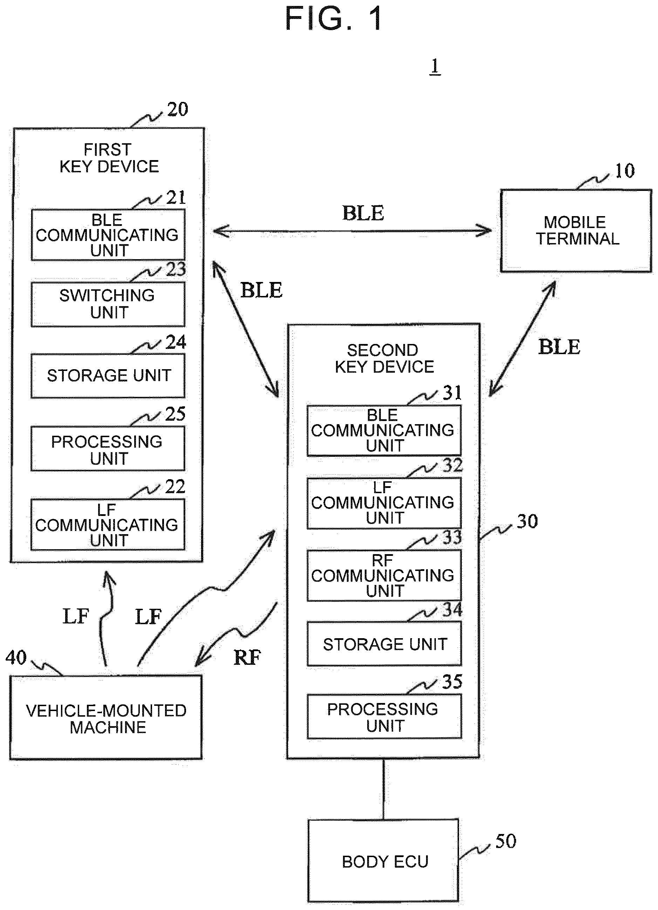

FIG. 1 schematically shows a vehicular control system 1 according to one embodiment of the invention. In FIG. 1, the vehicular control system 1 includes a mobile terminal 10, first key device 20, second key device 30, and vehicle-mounted machine 40. To the second key device 30 is connected a body ECU 50 that is an electronic control unit (ECU) capable of performing control for locking or unlocking vehicle doors.

The mobile terminal 10 is a versatile, terminal device, such as a smartphone, which is owned by a user who uses carsharing service. The mobile terminal 10, which is duly authorized by a carsharing business operator, can operate a specified vehicle. The mobile terminal 10 is duly authorized when information required for authentication (which will be called "information for authentication") is provided from the carsharing business operator to the mobile terminal 10, via a predetermined service reservation process, for example. The information for authentication includes the date and time of start of use of the vehicle, time period of use, vehicle identification ID as an identifier that specifies the vehicle used, and so forth.

The mobile terminal 10 has a function that enables the mobile terminal 10 to perform wireless communications with the first key device 20 and the second key device 30. The mobile terminal 10 according to this embodiment has a function of performing wireless communications according to a BLE (Bluetooth (registered trademark) Low Energy) communication technology (an example of "third communication technology" in the appended claims) as one example of wireless communication technology, and is able to send and receive BLE signals to and from the first key device 20 and the second key device 30.

The first key device 20 functions as a vehicle key capable of generating a command concerning certain operation of the vehicle, under a condition that the first key device 20 can properly communicate with the mobile terminal 10, and the mobile terminal 10 is authenticated as a duly authorized terminal of a carsharing user. The first key device 20 is provided by a manufacturer or dealer of the vehicle. The operation of the vehicle for which a command can be generated by the first key device 20 when the above condition is met may be operation to start the vehicle engine, for example. The first key device 20 is provided in the vehicle such that it can be taken out of the vehicle (namely, the first key device 20 is not fixed within the vehicle), and the carsharing user can freely carry the first key device 20, during the period of use of the carsharing service. Namely, the first key device 20 is permitted to be taken out of the vehicle by the carsharing user.

The first key device 20 includes a BLE communicating unit 21, LF communicating unit 22, switching unit 23, storage unit 24, and processing unit 25. The BLE communicating unit 21 has a function of performing wireless communications according to the BLE communication technology, and can send and receive BLE signals to and from the mobile terminal 10 and the second key device 30. The LF communicating unit 22 has a function of performing wireless communications according to a communication technology (which will be called "LF (Low Frequency) communication technology") using radio waves of a given frequency band (such as 134 kHz), and can receive LF signals (such as a WAKE signal and a CHALLENGE signal) transmitted from the vehicle-mounted machine 40. The first key device 20 determines that the received signal is a signal from the vehicle when it is an LF signal. The switching unit 23 consists of two or more physical switches that can be operated by the user. The switching unit 23 includes a power-supply SW that places a power supply of the first key device 20 in the ON/OFF state, paring SW used when establishing wireless communication with the mobile terminal 10, door SW used when locking or unlocking vehicle doors, and so forth. The storage unit 24 stores in advance a vehicle identification ID uniquely assigned to the vehicle that can be operated with the first key device 20 (namely, the vehicle equipped with the first key device 20). The processing unit 25 performs certain operations, such as collation, computation, and generation, which are required to be performed by the first key device 20 and will be described later.

The second key device 30 functions as a device (key unit) that can cooperate with the first key device 20 to generate a command concerning certain operation of the vehicle. The operation of the vehicle for which the command can be generated by the second key device 30 may be operation to control the body ECU 50 capable of locking or unlocking vehicle doors. The second key device 30 is fixedly provided within the vehicle cabin.

The second key device 30 includes a BLE communicating unit 31, LF communicating unit 32, RF communicating unit 33, storage unit 34, and processing unit 35. The BLE communicating unit 31 has a function of performing wireless communications according to the BLE communication technology, and can send and receive BLE signals to and from the mobile terminal 10 and the first key device 20. The LF communicating unit 32 has a function of performing wireless communications according to the LF communication technology, and can receive LF signals from the vehicle-mounted machine 40. The second key device 30 determines that the received signal is a signal from the vehicle, when it is an LF signal. The LF communicating unit 32 is configured to receive the LF signal transmitted from the vehicle-mounted machine 40 toward the inside of the vehicle cabin, and the LF signal transmitted from the vehicle-mounted machine 40 toward the outside of the vehicle cabin, while distinguishing them from each other. This configuration may be implemented by providing two LF receiving antennas for the inside and outside of the vehicle cabin, or may be implemented by installing the second key device 30 at a location where a single LF receiving antenna can receive both the LF signal for the inside of the vehicle and the LF signal for the outside of the vehicle. The RF communicating unit 33 has a function of performing wireless communications according to a communication technology (which will be called "RF (Radio Frequency) communication technology") using radio waves of a higher frequency band (such as 300 to 400 MHz) than that of the LF communication technology, and can send an RF signal to the vehicle-mounted machine 40. The RF signal may be, for example, an ACK signal (Acknowledgement signal) or a response signal. The storage unit 34 stores in advance a vehicle identification ID uniquely assigned to the vehicle that can be operated with the second key device 30 (i.e., the vehicle on which the second key device 30 is installed). The processing unit 35 performs certain operations, such as collation, computation, and generation, which are required to be performed by the second key device 30 and will be described later.

Here, it is not limited to this embodiment that the LF signal is used as the WAKE signal and the RF signal is used as the ACK signal or the response signal. For example, the RF signal may be used as the WAKE signal and the LF signal is used as the ACK signal or the response signal. Communication technologies used for the WAKE signal, and the ACK signal or the response signal may be selected so that the WAKE signal and the ACK signal or the response signal are able to be distinguished. For example, a frequency band of the WAKE signal may be different form a frequency band of the ACK signal or the response signal.

The vehicle-mounted machine 40 is a device that cooperates with the key devices to perform an authentication process via wireless communications, and permits the vehicle to perform operation, such as locking/unlocking of vehicle doors and engine starting, based on a determination that the key devices having the vehicle identification ID registered on the vehicle exist in detection areas formed inside or outside of the vehicle cabin. A series of processes from the authentication process to a process of permitting the vehicle to perform locking/unlocking of the vehicle, engine starting, etc. will be called "smart function". The vehicle-mounted machine 40 has a function of performing wireless communications according to the LF communication technology and wireless communications according to the RF communication technology, with the first key device 20 and the second key device 30. Thus, the vehicle-mounted machine 40 can send LF signals toward the inside and outside of the vehicle cabin, to the first key device 20 and the second key device 30, and can receive an RF signal from the second key device 30 as a response to the LF signal. The vehicle-mounted machine 40 has a function of determining whether the first key device 20 and the second key device 30 are registered, legitimate key devices, and a function of determining whether each of the first key device 20 and the second key device 30 exists in a detection area within the vehicle cabin or a detection area outside the vehicle cabin.

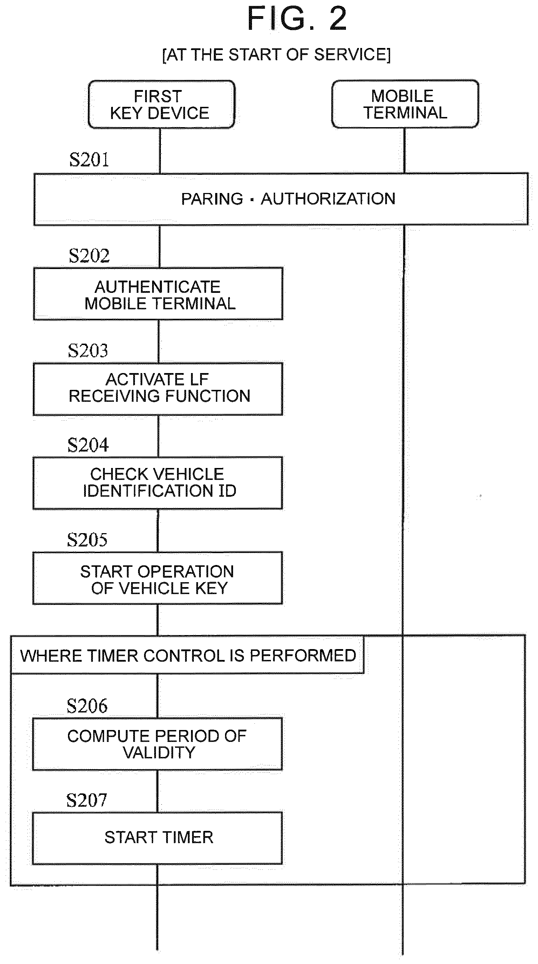

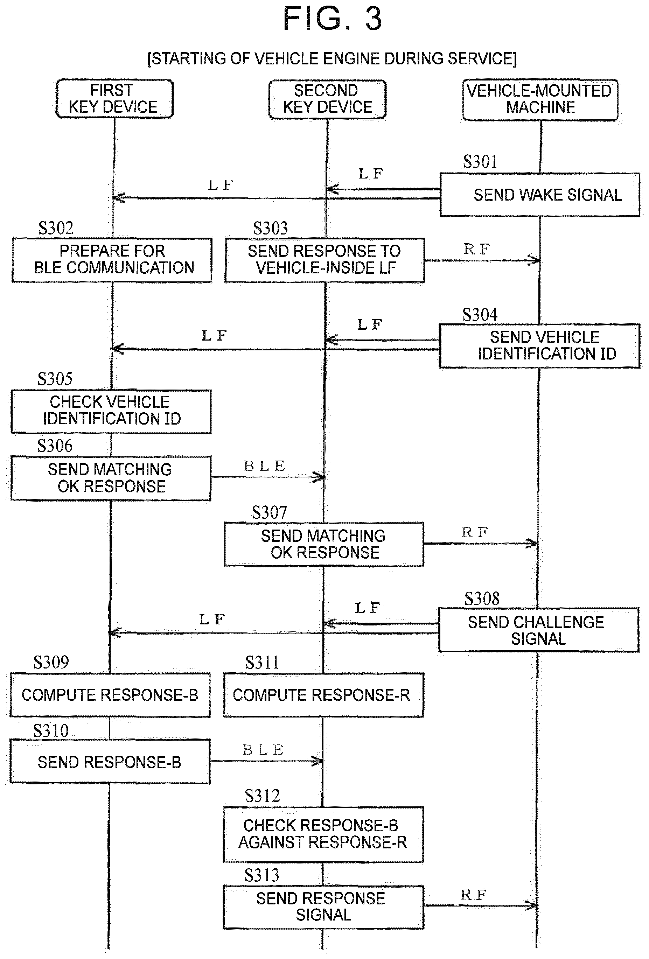

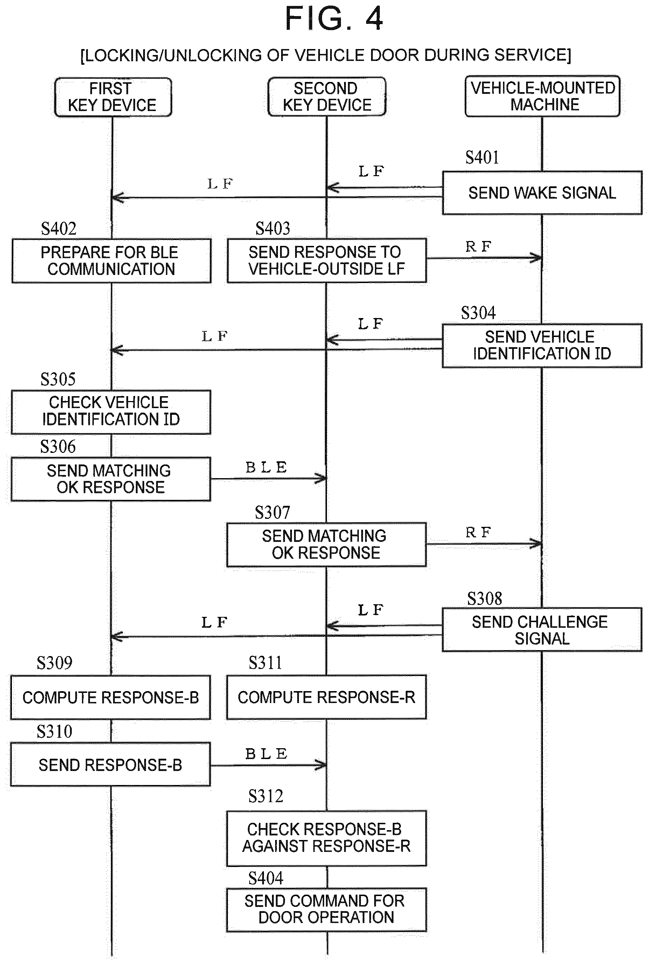

Next, referring further to FIG. 2 to FIG. 4, carsharing processing performed by the vehicular control system 1 according to this embodiment will be described. FIG. 2 is a sequence diagram showing one example of a process performed between the mobile terminal 10 and the first key device 20 when the carsharing service is started. FIG. 3 is a sequence diagram showing one example of a process performed among the mobile terminal 10, first key device 20, and second key device 30 when the engine is started during the service. FIG. 4 is a sequence diagram showing one example of a process performed among the mobile terminal 10, first key device 20, and second key device 30 when vehicle doors are locked or unlocked during the service.

(1) When the carsharing service is started, the sequence shown in FIG. 2 is executed, between the mobile terminal 10 and the first key device 20. The sequence shown in FIG. 2 is started in a condition where the vehicle doors are unlocked through operation of the mobile terminal 10, and the user who uses the carsharing service is allowed to enter the vehicle. The first key device 20 does not operate as the vehicle key at this point in time.

In step S201, the mobile terminal 10 and the first key device 20 perform pairing operation to recognize each other as communications partners, so as to be wirelessly connected to each other. For example, in the BLE communication system, the pairing SW provided in advance in the switching unit 23 of the first key device 20 is pushed down, to actuate the BLE communicating unit 21 of the first key device 20, so that the first key device 20 is brought into a BLE communication standby state, and pairing operation can be carried out on the mobile terminal 10 side. After establishing wireless communication through the pairing operation, the mobile terminal 10 and the first key device 20 perform authentication operation, using information for authentication possessed by the mobile terminal 10.

In step S202, the first key device 20 causes the processing unit 25 to authenticate the mobile terminal 10, based on the information for authentication received from the mobile terminal 10. When authentication of the mobile terminal 10 fails, this sequence ends. Cases where authentication of the mobile terminal 10 fails include, for example, the case where the use of the vehicle is reserved, but the present time is not within a period in which the vehicle can be used.

In step S203, the first key device 20, which has authenticated the mobile terminal 10, actuates the LF communicating unit 22, so as to be placed in an LF standby state in which the first key device 20 can receive an LF signal from the vehicle-mounted machine 40 at any time.

In step S204, the first key device 20, which has authenticated the mobile terminal 10, causes the processing unit 25 to check the vehicle identification ID included in the information for authentication, against the vehicle identification ID stored in the storage unit 24. When the two vehicle identification IDs do not match each other, and matching fails, this sequence ends. Cases where matching of the vehicle identification ID fails include, for example, the case where the present time is in the period in which the vehicle can be used, but the user is on board a different vehicle. Thus, checking of the vehicle identification ID as well as authentication of the mobile terminal 10 is carried out, so that the mobile terminal 10 can be determined as a mobile terminal to which the vehicle key registered on the vehicle is granted and which has a due or legitimate authority.

When matching of the vehicle identification ID succeeds, step S205 is executed in which the first key device 20 activates a function necessary to implement certain vehicle operation held in advance, and starts operating as a legitimate vehicle key capable of operating the vehicle to which the vehicle identification ID is assigned. In this manner, the carsharing service of the vehicle is started using the vehicular control system 1.

In the case where the time at which the first key device 20 finishes operating as the legitimate vehicle key is controlled with a timer, at the end of the service which will be described later, a further sequence as follows is executed. The timer is provided in the processing unit 25, for example.

In step S206, the first key device 20 causes the processing unit 25 to compute a period of validity in which the vehicle can be used (i.e., a period of validity in which the first key device 20 can operate as the legitimate vehicle key), based on the date and time of start of use of the vehicle and the time period of use, which are included in the information for authentication.

In step S207, the first key device 20 sets a timer (not shown) so that the timer completes counting at the end of the period of validity thus computed, and starts counting with the timer.

In another example, the first key device 20 may receive time information indicating the period of validity in which the first key device 20 can operate as the vehicle key, from the mobile terminal 10, when the carsharing user starts using the service. Then, a timer may be set so as to complete counting at the end of the period of validity, at the time when the time information is received from the mobile terminal 10, and the timer may start counting.

(2) When the engine is started during the carsharing service, a sequence shown in FIG. 3 is executed, among the mobile terminal 10, first key device 20, and second key device 30. The sequence shown in FIG. 3 is started, when a command for start of the engine is detected by the vehicular control system 1, such as when the user pushes down an engine start switch, during execution of the carsharing service, after the first key device 20 starts operating as the legitimate vehicle key.

In step S301, the vehicle-mounted machine 40 sends a WAKE signal for searching for a key device present around the machine 40, to the inside and outside of the vehicle cabin, using the LF communication technology.

In step S302, the first key device 20 receives the WAKE signal transmitted from the vehicle-mounted machine 40, via the LF communicating unit 22. Then, the first key device 20 is wirelessly connected to the second key device 30 that has been paired with the first key device 20, according to the BLE communication technology, in response to the WAKE signal received, so as to prepare for BLE communications.

In step S303, the second key device 30 receives the WAKE signal transmitted from the vehicle-mounted machine 40, via the LF communicating unit 32. Then, the second key device 30 sends a response (ACK signal) to the received WAKE signal, from the RF communicating unit 33 to the vehicle-mounted machine 40, using the RF communication technology. The second key device 30 can determine whether the LF signal transmitted from the vehicle-mounted machine 40 is directed to the inside of the vehicle cabin or to the outside of the vehicle cabin; therefore, the second key device 30 can determine whether the first key device 20 is located within the vehicle cabin or outside the vehicle cabin, based on the received WAKE signal and the time at which the first key device 20 prepares for BLE communications in step S302. Thus, only when the second key device 30 determines that the first key device 20 is located within the vehicle cabin, the second key device 30 sends the response (ACK signal) to the WAKE signal (vehicle-inside LF) directed to the inside of the vehicle cabin, from the RF communicating unit 33 to the vehicle-mounted machine 40, using the RF communication technology.

In this connection, the response (ACK signal) to the WAKE signal may be transmitted in step S303, irrespective of whether the carsharing service of the vehicle is being carried out or not, namely, whether the first key device 20 is operating as the vehicle key or not. However, the second key device 30 is preferably controlled so as to transmit the response only when the first key device 20 operates as the vehicle key and the carsharing service is being carried out, because electric power consumed by a vehicle-mounted battery can be reduced. The latter control may be performed by actuating the RF communicating unit 33, at the time when the second key device 30 receives a matching OK response (ACK signal) from the first key device 20 in step S306 that will be described later, for example.

In step S304, the vehicle-mounted machine 40, which has received the response (ACK signal) from the second key device 30, sends a signal including the vehicle identification ID for determining whether the key device that has sent the response is a key device of the own vehicle (vehicle on which the vehicle-mounted machine 40 is installed), using the LF communication technology.

In step S305, the first key device 20 receives the signal including the vehicle identification ID and transmitted from the vehicle-mounted machine 40, via the LF communicating unit 22. Then, the first key device 20 causes the processing unit 25 to check the vehicle identification ID included in the received signal, against the vehicle identification ID stored in advance in the storage unit 24. Immediately after the start of the carsharing service, the vehicle identification ID possessed by the first key device 20 mounted in the vehicle normally matches the vehicle identification ID possessed by the vehicle-mounted machine 40; therefore, matching of the vehicle identification ID succeeds. However, if the first key device 20 is taken out of the vehicle, and is replaced with a key device of another vehicle, which is then returned to the vehicle, for example, the two vehicle identification IDs do not match each other, and matching of the vehicle identification ID may fail. In this case, this sequence ends.

When matching of the vehicle identification ID succeeds, step S306 is executed in which the first key device 20 sends a matching OK response (ACK signal) that informs successful matching of the vehicle identification ID, from the BLE communicating unit 21 to the second key device 30, using the BLE communication technology.

After the second key device 30 receives the matching OK response (ACK signal) transmitted from the first key device 20 using the BLE communication technology, step S307 is executed in which the second key device 30 sends the matching OK signal (ACK signal) from the RF communicating unit 33 to the vehicle-mounted machine 40, using the RF communication technology.

In step S308, the vehicle-mounted machine 40, which has received the matching OK response (ACK signal) from the second key device 30, sends a CHALLENGE signal for determining whether the key device that has sent the response is a legitimate key device that can permit engine starting, using the LF communication technology.

In step S309, the first key device 20 receives the CHALLENGE signal from the vehicle-mounted machine 40, via the LF communicating unit 22. Then, the first key device 20 causes the processing unit 25 to perform predetermined cryptographic computation based on the received CHALLENGE signal, so as to obtain value "RESPONSE-B" as a result of the cryptographic computation performed by the first key device 20.

In step S310, the first key device 20, which has generated the RESPONSE-B, sends the RESPONSE-B from the BLE communicating unit 21 to the second key device 30, using the BLE communication technology.

In step S311, the second key device 30 receives the CHALLENGE signal transmitted from the vehicle-mounted machine 40 to the inside and outside of the vehicle, via the LF communicating unit 32. Then, the second key device 30 causes the processing unit 35 to perform the same cryptographic computation as that performed by the first key device 20 based on the received CHALLENGE signal, so as to obtain value "RESPONSE-R" as a result of the cryptographic computation performed by the second key device 30.

In step S312, the second key device 30 causes the processing unit 35 to determine the correctness of cryptographic computation results, by checking the RESPONSE-B received from the first key device 20 according to the BLE communication technology, against the RESPONSE-R obtained by itself.

When matching of the responses succeeds, step S313 is executed in which the second key device 30 sends a response signal that informs successful matching of the responses to the CHALLENGE signal, from the RF communicating unit 33 to the vehicle-mounted machine 40, using the RF communication technology. The RESPONSE-R is used as the response signal transmitted toward the vehicle-mounted machine 40. As the response signal, the RESPONSE-B may be used, or both the RESPONSE-B and the RESPONSE-R may be used. The vehicle-mounted machine 40, which has received the response signal, generates a predetermined command or performs control necessary for starting the engine of the vehicle, with respect to its own ECU or a given ECU.

The vehicle-mounted machine 40 normally requests transmission of the response signal within a response period from transmission of the CHALLENGE signal (step S308) to the time when a given length of time elapses. Thus, when it takes the above given length of time or longer to check the RESPONSE-B (step S312) in the second key device 30, transmission of the response signal (step S313) cannot be accomplished within the response period. In this case, the response signal that could not be transmitted as a response to the first CHALLENGE signal may be transmitted to the vehicle-mounted machine 40, within a response period of a second CHALLENGE signal (retry) from the vehicle-mounted machine 40.

(3) When the vehicle doors are locked or unlocked during the carsharing service, a sequence shown in FIG. 4 is executed, among the mobile terminal 10, first key device 20, and second key device 30. The sequence shown in FIG. 4 is started, when a command to lock or unlock the vehicle doors is detected by the vehicular control system 1, such as when a sensor provided at an outside door handle is operated by the user, while the carsharing service is carried out after the first key device 20 starts operating as a legitimate vehicle key.

In step S401, the vehicle-mounted machine 40 sends a WAKE signal for searching for a key device existing around the machine 40, toward the inside and outside of the vehicle cabin, respectively, using the LF communication technology.

In step S402, the first key device 20 receives the WAKE signal from the vehicle-mounted machine 40, via the LF communicating unit 22. Then, the first key device 20 is wirelessly connected to the second key device 30 that has been paired with the first key device 20, according to the BLE communication technology, in response to the WAKE signal received, so as to prepare for BLE communications.

In step S403, the second key device 30 receives the WAKE signal from the vehicle-mounted machine 40, via the LF communicating unit 32. Then, the second key device 30 sends a response (ACK signal) to the WAKE signal directed to the outside of the vehicle cabin, from the RF communicating unit 33 to the vehicle-mounted machine 40, using the RF communication technology. Thus, the second key device 30 can behave as if it were located outside the vehicle cabin, by responding only to the WAKE signal (vehicle-outside LF) directed to the outside of the vehicle cabin, though the second key device 30 can receive both the signal directed to the inside of the vehicle cabin and the signal directed to the outside of the vehicle cabin. In this case, even if the first key device 20 exists within the vehicle cabin, there is no problem since the vehicle doors can be locked or unlocked through operation of the mobile terminal 10, like the time when the service is started.

Step S304 through step S312 following step S403 are executed in the same manner as those of FIG. 3 as described above.

When matching of the responses succeeds in step S312, step S404 is executed in which the second key device 30 generates a command for door operation, which is needed for locking or unlocking the vehicle doors, to the body ECU 50.

(4) When the carsharing service is finished, the power supply of the first key device 20 that has operated as the legitimate vehicle key capable of operating the vehicle is turned off, so that its operation is finished. A method of turning off the power supply of the first key device 20 may be selected from the following methods.
1. The mobile terminal 10 is manipulated so as to turn off the power supply of the first key device 20. For example, through service termination operation via an application screen of the mobile terminal 10, the power supply of the first key device 20 is placed in the OFF state via BLE communications. In another example, operation to cancel pairing of the mobile terminal 10 with the first key device 20 is performed, so that the power supply of the first key device 20 is automatically placed in the OFF state.
2. The first key device 20 turns off its own power supply. For example, the switching unit 23 included in the first key device 20 is operated, so as to bring the power supply of the first key device 20 into the OFF state. In another example, the period of validity of the carsharing service, which has been counted with a timer of the processing unit 25, expires, so that the power supply of the first key device 20 is placed in the OFF state.

As a measure taken when the carsharing user fails to turn off the power supply of the first key device 20, a process as follows may be performed. For example, the vehicle-mounted machine 40 sends an LF signal to the inside of the vehicle cabin, in response to vehicle door locking operation performed when the carsharing user finishes using the carsharing service. It can be determined whether the carsharing user finishes using the service, by determining whether a manual operation button, such as "End of Use" provided on a dedicated app of the mobile terminal 10, is pushed down, for example. The first key device 20, which has received the LF signal, sends a certain BLE signal as a response to the second key device 30. The second key device 30, which has received the response, does not generate a command for locking vehicle doors, to the body ECU 50, even when the locking operation is approved, but sends a BLE signal that calls for attention so as to urge the user to turn off the power supply of the first key device 20, to the mobile terminal 10. As an example of method for calling for attention, characters may be displayed on the screen of the mobile terminal 10, or the mobile terminal 10 may be oscillated, or sound or light may be generated from the mobile terminal 10.

As described above, in the vehicular control system 1 according to one embodiment of the invention, the first key device 20 that can communicate with the mobile terminal 10, using the BLE communication technology, and can communicate with the vehicle-mounted machine 40, using the LF communication technology, is provided in the vehicle, and the second key device 30 that can communicate with the first key device 20, using the BLE communication technology, and can communicate with the vehicle-mounted machine 40, using the LF communication technology and the RF communication technology, is provided in the vehicle. The first key device 20 is configured to operate as the vehicle key upon the success of authentication of the mobile terminal 10 that is owned by the carsharing user and is duly authorized, and the second key device 30 is configured as the key unit having a function of the vehicle key. With this configuration, the vehicular control system that utilizes the smart key system with a high level of security can be realized.

In the vehicular control system 1 according to this embodiment, the first key device 20 starts operating as the vehicle key upon the success of authentication of the mobile terminal 10 that is owned by the carsharing user and is duly authorized. With this control, even when a third party acquires the first key device 20, through unlawful unlocking or picking (forced opening) of a vehicle door, for example, the vehicle is less likely to suffer from theft, since the first key device 20 does not operate as the vehicle key.

In the vehicular control system 1 according to this embodiment, in the smart operation during the carsharing service, the response to the authentication, which is required by the vehicle-mounted machine 40 to be generated from the first key device 20, is transmitted back to the vehicle-mounted machine 40, after being subjected to a determination made by the second key device 30. With this operation, the security is improved, as compared with a known smart key system using only the vehicle key (the first key device 20) or the key unit (the second key device 30).

In the vehicular control system 1 according to this embodiment, the second key device 30 sends the RF signal responsive to the LF signal, to the vehicle-mounted machine 40, only while the first key device 20 is operating as the vehicle key. Thus, no unnecessary response is generated from the second key device 30 while the carsharing service is not being carried out, and electric power consumption of the vehicle-mounted battery can be reduced.

In the vehicular control system 1 according to this embodiment, the LF communicating unit 32 of the second key device 30 is configured to be able to receive both the LF signal transmitted from the vehicle-mounted machine 40 toward the inside of the vehicle cabin, and the LF signal transmitted from the vehicle-mounted machine 40 to the outside of the vehicle cabin. With this configuration, the second key device 30 can send the RF signal back to the vehicle-mounted machine 40 in response to the LF signal transmitted from the vehicle-mounted machine 40 toward the outside of the vehicle cabin, even though the second key device 30 is fixedly installed inside the vehicle cabin. Therefore, it is possible to implement not only the engine starting operation (smart start function) but also the vehicle-door locking/unlocking operation (smart entry function).

Further, in the vehicular control system 1 according to this embodiment, when the carsharing service is finished, the carsharing user is required to perform operation to turn off the power supply of the first key device 20, or the first key device 20 itself sets a time limit, with which the power supply is automatically turned off. Thus, the security is kept at a high level in a period in which the carsharing service is not carried out.

The first key device 20 that functions as a vehicle key after authentication of the mobile terminal is provided by a vehicle manufacturer, dealer, or the like. Thus, the vehicular control system 1 according to this embodiment can be employed in a vehicle directed to a country or region where a device, such as a smartphone, which is not provided by a vehicle manufacturer, dealer, or the like is not permitted to be used as a vehicle key. From this, it is possible to provide the carsharing service using the vehicle employing a smart key system of which security level is high in the country or region where the device which is not provided by the vehicle manufacturer, dealer, or the like is not permitted to be used as the vehicle key.

This invention is not limitedly regarded as a vehicular control system, but may be regarded as a vehicle on which the vehicular control system is installed, or a control method implemented by one or more computers having a processor and a memory which constitute the vehicular control system, or a control program that describes a process or routine executed by the computer, or a computer-readable, non-volatile storage medium in which the control program is stored.

The vehicular control system of the invention can be used in a smart key system, or the like, which performs matching operation between the system and an electronic key via wireless communications, so as to control vehicle operation.

## Claims

1. A vehicular control system comprising:
a vehicle-mounted machine (40) configured to perform first communication and second communication, the first communication being communication according to a first communication technology using radio waves of a first frequency band and the second communication being communication according to a second communication technology using radio waves of a second frequency band;
a mobile terminal (10) configured to perform third communication according to a third communication technology different from the first communication technology and the second communication technology;
a first key device (20) provided in a vehicle, the first key device (20) being configured to
obtain authentication information including an identifier of the vehicle from the mobile terminal (10) using the third communication technology, and
operate as a vehicle key of the vehicle specified by the identifier; and
a second key device (30) provided in the vehicle, the second key device (30) being configured to
receive a first computation result according to the third communication technology, the first computation result being a result of predetermined computation performed by the first key device (20) based on a first signal, and the first signal being transmitted from the vehicle-mounted machine (40) according to the first communication technology,
obtain a second computation result by performing predetermined computation based on the first signal and
send a second signal to the vehicle-mounted machine (40) according to the second communication technology when the first computation result matches the second computation result.

2. The vehicular control system according to claim 1, wherein:
the third communication technology is a short-range wireless communication technology;
the first signal is an low frequency signal;
the second signal is an radio frequency signal;
the first key device (20) includes
a first BLE communicating unit (21) configured to send and receive a signal based on the third communication technology to and from the mobile terminal (10) and the second key device (30) and
a first LF communicating unit (22), the first BLE communicating unit (21) being configured to receive the low frequency signal from the vehicle-mounted machine (40); and
the second key device (30) includes
a second BLE communicating unit (31) configured to send and receive a signal based on the third communication technology to and from the mobile terminal (10) and the first key device (20),
a second LF communicating unit (32) configured to receive the low frequency signal from the vehicle-mounted machine (40), and
an RF communicating unit (33) configured to send the radio frequency signal to the vehicle-mounted machine (40).

3. The vehicular control system according to claim 2, wherein the second key device (30) is configured to send the radio frequency signal responsive to the low frequency signal to the vehicle-mounted machine (40) only when the first key device (20) operates as the vehicle key.

4. The vehicular control system according to claim 2, wherein the second LF communicating unit (32) is configured to receive, while distinguishing the low frequency signal toward an inside of a vehicle cabin from the low frequency signal toward an outside of the vehicle cabin, the low frequency signal transmitted from the vehicle-mounted machine (40) toward the inside of the vehicle cabin and the low frequency signal transmitted from the vehicle-mounted machine (40) toward the outside of the vehicle cabin.

5. The vehicular control system according to claim 1, wherein the first key device (20) is configured to
receive, from the mobile terminal (10), time information indicating a period of validity in which the first key device is operable as the vehicle key and
start counting time from a timing when the time information is received until the period of validity expires.

6. The vehicular control system according to claim 1, wherein the first key device (20) finishes operating as the vehicle key in response to at least one of an end command received from the mobile terminal (10), operation to eliminate communication by the mobile terminal (10), or finishing operation by the first key device (20).

7. The vehicular control system according to claim 5, wherein the first key device (20) finishes operating as the vehicle key when the period of validity expires.

8. The vehicular control system according to claim 1, wherein the first key device (20) provided in the vehicle is configured to:
establish wireless communication with the mobile terminal (10) through pairing operation;
obtain the authentication information including the identifier of the vehicle from the mobile terminal (10) using the third communication technology;
authenticate the mobile terminal (10) based on the authentication information; and
operate as the vehicle key of the vehicle specified by the identifier of the vehicle when the mobile terminal (10) is authenticated.

9. The vehicular control system according to claim 1, wherein the first frequency band and the second frequency band are different from each other.

10. The vehicular control system according to claim 1, wherein the first key device (20) is a mobile device.

11. The vehicular control system according to claim 1, wherein the second key device (30) is fixed in the vehicle.

12. The vehicular control system according to claim 1, wherein:
the authentication information includes time information concerning a date and a time of start of use of the vehicle and a period of time for which the vehicle is used; and
the first key device (20) is configured to
compute, based on the time information, a period of validity in which the first key device (20) is operable as the vehicle key,
set a timer such that the timer finishes counting when the period of validity expires; and
cause the timer to start counting at a timing when the timer is set such that the timer finishes counting when the period of validity expires.

13. The vehicular control system according to claim 12, wherein the first key device (20) is configured to finish operating as the vehicle key at a timing when the period of validity counted with the timer expires.

## Patentansprüche

1. Fahrzeugsteuersystem, aufweisend:
eine am Fahrzeug befestigte Maschine (40), die so konfiguriert ist, dass sie eine erste Kommunikation und eine zweite Kommunikation durchführt, wobei die erste Kommunikation eine Kommunikation gemäß einer ersten Kommunikationstechnologie ist, die Funkwellen eines ersten Frequenzbands nutzt,
und die zweite Kommunikation eine Kommunikation gemäß einer zweiten Kommunikationstechnologie ist, die Funkwellen eines zweiten Frequenzbands nutzt;
ein mobiles Endgerät (10), das so konfiguriert ist, dass es eine dritte Kommunikation gemäß einer dritten Kommunikationstechnologie durchführt, die sich von der ersten Kommunikationstechnologie und der zweiten Kommunikationstechnologie unterscheidet;
eine erste Schlüsselvorrichtung (20), die sich in einem Fahrzeug befindet, wobei die erste Schlüsselvorrichtung (20) so konfiguriert ist, dass sie
Authentifizierungsinformationen, die einen Identifikator des Fahrzeugs beinhalten, von dem mobilen Endgerät (10) unter Verwendung der dritten Kommunikationstechnologie ermittelt, und
als ein Fahrzeugschlüssel des Fahrzeugs, das durch den Identifikator bestimmt wurde, fungiert, und
eine zweite Schlüsselvorrichtung (30), die sich in dem Fahrzeug befindet, wobei die zweite Schlüsselvorrichtung (30) so konfiguriert ist, dass sie
ein erstes Berechnungsergebnis gemäß der dritten Kommunikationstechnologie empfängt, wobei das erste Berechnungsergebnis ein Ergebnis einer vorgegebenen Berechnung ist, die durch die erste Schlüsselvorrichtung (20) auf Basis eines ersten Signals durchgeführt wird, und wobei das erste Signal von der am Fahrzeug befestigten Maschine (40) gemäß der ersten Kommunikationstechnologie übertragen wird,
ein zweites Berechnungsergebnis durch das Durchführen einer vorgegebenen Berechnung auf Basis des ersten Signals ermittelt, und
ein zweites Signal gemäß der zweiten Kommunikationstechnologie an die am Fahrzeug befestigte Maschine (40) sendet, wenn das erste Berechnungsergebnis dem zweiten Berechnungsergebnis entspricht.

2. Fahrzeugsteuersystem nach Anspruch 1, wobei:
die dritte Kommunikationstechnologie eine Kurzreichweitendrahtloskommunikationstechnologie ist;
das erste Signal ein Niederfrequenzsignal ist;
das zweite Signal ein Funkfrequenzsignal ist;
die erste Schlüsselvorrichtung (20) beinhaltet
eine erste BLE-Kommunikationseinheit (21), die so konfiguriert ist, dass sie ein Signal auf Basis der dritten Kommunikationstechnologie an das mobile Endgerät (10) und die zweite Schlüsselvorrichtung (30) sendet bzw. von diesen empfängt, und
eine erste LF-Kommunikationseinheit (22), wobei die erste BLE-Kommunikationseinheit (21) so konfiguriert ist, dass sie das Niederfrequenzsignal von der am Fahrzeug befestigten Maschine (40) empfängt; und
die zweite Schlüsselvorrichtung (30) beinhaltet
eine zweite BLE-Kommunikationseinheit (31), die so konfiguriert ist, dass sie ein Signal auf Basis der dritten Kommunikationstechnologie an das mobile Endgerät (10) und die erste Schlüsselvorrichtung (20) sendet bzw. von diesen empfängt,
eine zweite LF-Kommunikationseinheit (32), die so konfiguriert ist, dass sie das Niederfrequenzsignal von der am Fahrzeug befestigten Maschine (40) empfängt; und
eine RF-Kommunikationseinheit (33), die so konfiguriert ist, dass sie das Funkfrequenzsignal an die am Fahrzeug befestigte Maschine (40) sendet.

3. Fahrzeugsteuersystem nach Anspruch 2, wobei die zweite Schlüsselvorrichtung (30) so konfiguriert ist, dass sie das Funkfrequenzsignal nur dann als Reaktion auf das Niederfrequenzsignal an die am Fahrzeug befestigte Maschine (40) sendet, wenn die erste Schlüsselvorrichtung (20) als der Fahrzeugschlüssel fungiert.

4. Fahrzeugsteuersystem nach Anspruch 2, wobei die zweite LF-Kommunikationseinheit (32) so konfiguriert ist, dass sie, während sie das Niederfrequenzsignal in Richtung eines Innenraums einer Fahrgastzelle von dem Niederfrequenzsignal in Richtung eines Raums außerhalb der Fahrgastzelle unterscheidet, das Niederfrequenzsignal, das von der am Fahrzeug befestigten Maschine (40) in Richtung des Innenraums der Fahrgastzelle übertragen wird, und das Niederfrequenzsignal, das von der am Fahrzeug befestigten Maschine (40) in Richtung des Raums außerhalb der Fahrgastzelle übertragen wird, empfängt.

5. Fahrzeugsteuersystem nach Anspruch 1, wobei die erste Schlüsselvorrichtung (20) so konfiguriert ist, dass sie von dem mobilen Endgerät (10) Zeitinformationen empfängt, die einen Gültigkeitszeitraum anzeigen, in dem die erste Schlüsselvorrichtung als der Fahrzeugschlüssel Verwendung finden kann, und ab einem Zeitpunkt, zu dem die Zeitinformationen empfangen werden, beginnt, die Zeit zu messen, bis die Gültigkeitsdauer abläuft.

6. Fahrzeugsteuersystem nach Anspruch 1, wobei die erste Schlüsselvorrichtung (20) als Reaktion auf zumindest eines von einem von dem mobilen Endgerät (10) empfangenen Endbefehl, einem Vorgang zum Eliminieren der Kommunikation durch das mobile Endgerät (10) oder einem Beendigungsvorgang durch die erste Schlüsselvorrichtung (20) aufhört, als der Fahrzeugschlüssel zu fungieren.

7. Fahrzeugsteuersystem nach Anspruch 5, wobei die erste Schlüsselvorrichtung (20) aufhört, als der Fahrzeugschlüssel zu fungieren, wenn die Gültigkeitsdauer abläuft.

8. Fahrzeugsteuersystem nach Anspruch 1, wobei die erste Schlüsselvorrichtung (20), die sich in dem Fahrzeug befindet, so konfiguriert ist, dass sie:
eine Drahtloskommunikation mit dem mobilen Endgerät (10) durch einen Pairingvorgang herstellt;
die Authentifizierungsinformationen, die den Identifikator des Fahrzeugs beinhalten, von dem mobilen Endgerät (10) unter Verwendung der dritten Kommunikationstechnologie ermittelt,
das mobile Endgerät (10) auf Basis der Authentifizierungsinformationen authentifiziert; und
als der Fahrzeugschlüssel des Fahrzeugs fungiert, das von dem Identifikator des Fahrzeugs bestimmt wird, wenn das mobile Endgerät (10) authentifiziert wird.

9. Fahrzeugsteuersystem nach Anspruch 1, wobei sich das erste Frequenzband und das zweite Frequenzband voneinander unterscheiden.

10. Fahrzeugsteuersystem nach Anspruch 1, wobei die erste Schlüsselvorrichtung (20) eine mobile Vorrichtung ist.

11. Fahrzeugsteuersystem nach Anspruch 1, wobei die zweite Schlüsselvorrichtung (30) in dem Fahrzeug befestigt ist.

12. Fahrzeugsteuersystem nach Anspruch 1, wobei:
die Authentifizierungsinformationen Zeitinformationen beinhalten, die ein Datum und eine Verwendungsstartzeit des Fahrzeugs und eine Zeitspanne, während der das Fahrzeug verwendet wird, betreffen; und
die erste Schlüsselvorrichtung (20) so konfiguriert ist, dass sie:
auf Basis der Zeitinformationen eine Gültigkeitsdauer berechnet, in der die erste Schlüsselvorrichtung (20) als der Fahrzeugschlüssel fungieren kann,
einen Timer so einstellt, dass der Timer das Zählen beendet, wenn die Gültigkeitsdauer abläuft; und
den Timer veranlasst, zu einem Zeitpunkt das Zählen zu beginnen, bei dem der Timer so eingestellt ist, dass der Timer das Zählen beendet, wenn die Gültigkeitsdauer abläuft.

13. Fahrzeugsteuersystem nach Anspruch 12, wobei die erste Schlüsselvorrichtung (20) so konfiguriert ist, dass sie zu einem Zeitpunkt aufhört, als der Fahrzeugschlüssel zu fungieren, zu dem die mit dem Timer gezählte Gültigkeitsdauer abläuft.

## Revendications

1. Système de commande de véhicule comprenant :
une machine montée dans un véhicule (40) configurée pour réaliser une première communication et une deuxième communication, la première communication étant une communication selon une première technologie de communications utilisant des ondes radio d'une première bande de fréquence et la deuxième communication étant une communication selon une deuxième technologie de communications utilisant des ondes radio d'une deuxième bande de fréquence ;
un terminal mobile (10) configuré pour réaliser une troisième communication selon une troisième technologie de communications différente de la première technologie de communications et de la deuxième technologie de communications ;
un premier dispositif de clé (20) prévu dans un véhicule, le premier dispositif de clé (20) étant configuré pour
obtenir de l'information d'authentification comprenant un identificateur du véhicule à partir du terminal mobile (10) en utilisant la troisième technologie de communications, et
fonctionner comme une clé de véhicule du véhicule spécifié par l'identificateur ; et
un deuxième dispositif de clé (30) prévu dans le véhicule, le deuxième dispositif de clé (30) étant configuré pour
recevoir un premier résultat de calcul selon la troisième technologie de communications, le premier résultat de calcul étant un résultat de calcul prédéterminé réalisé par le premier dispositif de clé (20) sur la base d'un premier signal, et le premier signal étant transmis à partir de la machine montée dans un véhicule (40) selon la première technologie de communications,
obtenir un deuxième résultat de calcul en réalisant un calcul prédéterminé sur la base du premier signal et
envoyer un deuxième signal à la machine montée dans un véhicule (40) selon la deuxième technologie de communications quand le premier résultat de calcul correspond au deuxième résultat de calcul.

2. Système de commande de véhicule selon la revendication 1, dans lequel :
la troisième technologie de communications est une technologie de communications sans fil à courte portée ;
le premier signal est un signal à basse fréquence ;
le deuxième signal est un signal de radiofréquence ;
le premier dispositif de clé (20) comprend
une première unité de communication BLE (21) configurée pour envoyer et recevoir un signal basé sur la troisième technologie de communications au et depuis le terminal mobile (10) et le deuxième dispositif de clé (30) et
une première unité de communication LF (22), la première unité de communication BLE (21) étant configurée pour recevoir le signal à basse fréquence provenant de la machine montée dans un véhicule (40) ; et
le deuxième dispositif de clé (30) comprend une deuxième unité de communication BLE (31) configurée pour envoyer et recevoir un signal basé sur la troisième technologie de communications au et depuis le terminal mobile (10) et le premier dispositif de clé (20),
une deuxième unité de communication LF (32) configurée pour recevoir le signal à basse fréquence provenant de la machine montée dans un véhicule (40), et
une unité de communication RF (33) configurée pour envoyer le signal de radiofréquence à la machine montée dans un véhicule (40).

3. Système de commande de véhicule selon la revendication 2, dans lequel le deuxième dispositif de clé (30) est configuré pour envoyer le signal de radiofréquence en réponse au signal à basse fréquence à la machine montée dans un véhicule (40) seulement quand le premier dispositif de clé (20) fonctionne en tant que clé de véhicule.

4. Système de commande de véhicule selon la revendication 2, dans lequel la deuxième unité de communication LF (32) est configurée pour recevoir, tout en distinguant le signal à basse fréquence vers un intérieur d'un habitacle de véhicule du signal à basse fréquence vers un extérieur de l'habitacle de véhicule, le signal à basse fréquence transmis depuis la machine montée dans un véhicule (40) vers l'intérieur de l'habitacle de véhicule et le signal à basse fréquence transmis depuis la machine montée dans un véhicule (40) vers l'extérieur de l'habitacle de véhicule.

5. Système de commande de véhicule selon la revendication 1, dans lequel le premier dispositif de clé (20) est configuré pour
recevoir, à partir du terminal mobile (10), de l'information de temps indiquant une période de validité au cours de laquelle le premier dispositif de clé peut fonctionner en tant que clé de véhicule et
commencer à compter le temps à partir d'un moment où l'information de temps est reçue jusqu'à ce que la période de validité expire.

6. Système de commande de véhicule selon la revendication 1, dans lequel le premier dispositif de clé (20) finit de fonctionner comme clé de véhicule en réponse à au moins une d'une commande de fin reçue du terminal mobile (10), d'une opération pour éliminer une communication par le terminal mobile (10), ou d'une opération de fin par le premier dispositif de clé (20).

7. Système de commande de véhicule selon la revendication 5, dans lequel le premier dispositif de clé (20) finit de fonctionner comme clé de véhicule quand la période de validité expire.

8. Système de commande de véhicule selon la revendication 1, dans lequel le premier dispositif de clé (20) prévu dans le véhicule est configuré pour :
établir une communication sans fil avec le terminal mobile (10) par l'intermédiaire d'une opération de couplage ;
obtenir l'information d'authentification comprenant l'identificateur du véhicule provenant du terminal mobile (10) en utilisant la troisième technologie de communications ;
authentifier le terminal mobile (10) sur la base de l'information d'authentification ; et
fonctionner en tant que clé de véhicule du véhicule spécifié par l'identificateur du véhicule quand le terminal mobile (10) est authentifié.

9. Système de commande de véhicule selon la revendication 1, dans lequel la première bande de fréquence et la deuxième bande de fréquence sont différentes l'une de l'autre.

10. Système de commande de véhicule selon la revendication 1, dans lequel le premier dispositif de clé (20) est un dispositif mobile.

11. Système de commande de véhicule selon la revendication 1, dans lequel le deuxième dispositif de clé (30) est fixé dans le véhicule.

12. Système de commande de véhicule selon la revendication 1, dans lequel :
l'information d'authentification comprend de l'information de temps concernant une date et une heure de début d'utilisation du véhicule et une durée pendant laquelle le véhicule est utilisé ; et
le premier dispositif de clé (20) est configuré pour
calculer, sur la base de l'information de temps, une période de validité pendant laquelle le premier dispositif de clé (20) peut fonctionner en tant que clé de véhicule,
déclencher un minuteur de telle sorte que le minuteur finit de compter quand la période de validité expire ; et
amener le minuteur à commencer à compter à un moment où le minuteur est déclenché de telle sorte que le minuteur finit de compter quand la période de validité expire.

13. Système de commande de véhicule selon la revendication 12, dans lequel le premier dispositif de clé (20) est configuré pour finir de fonctionner en tant que clé de véhicule à un moment où la période de validité comptée avec le minuteur expire.
